# EUROPÄISCHE PATENTSCHRIFT

(11) **EP 3 845 859 B1**
(45) Veröffentlichungstag und Bekanntmachung des Hinweises auf die Patenterteilung: **17.04.2024**
(21) Anmeldenummer: 21158747.2
(22) Anmeldetag: 22.12.2016
(51) Int. Cl.: G01C 15/00

(54) **KOORDINATENMESSGERÄT MIT AUTOMATISCHER ZIELOBJEKTERKENNUNG**
COORDINATE MEASURING DEVICE WITH AUTOMATED TARGET OBJECT DETECTION
APPAREIL DE MESURE DE COORDONNÉES DOTÉ D'UNE RECONNAISSANCE D'OBJET CIBLE AUTOMATIQUE

(43) Veröffentlichungstag der Anmeldung: 07.07.2021
(62) Teilanmeldung aus: 16206368.9
(73) Patentinhaber: Leica Geosystems AG, 9435 Heerbrugg (CH)
(72) Erfinder: LÜTHI, Thomas, CH-5000 Aarau (CH); STEGER, Roger, CH-5620 Bremgarten (CH)
(74) Vertreter: Kaminski Harmann

(56) Entgegenhaltungen:
- EP-A2- 2 068 117
- WO-A1-01/04575
- WO-A1-2007/079601
- WO-A1-2012/141810
- DE-A1-102010 024 014
- DE-A1-102012 221 760
- US-A1- 2007 267 498

## Beschreibung

Die vorliegende Erfindung betrifft ein Koordinatenmessgerät zum Erfassen einer Position eines im Raum bewegbaren, einen Retroreflektor aufweisenden Zielobjekts, wobei eine automatische Identifizierung eines erfassten Zielobjekts und eine Zuordnung von mit dem Zielobjekt assoziierten Spezifikationen erfolgt.

Koordinatenmessgeräte, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden. Ein Zielpunkt kann dabei durch eine retro-reflektierende Einheit (z. B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z. B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z. B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z. B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Zur Entfernungsmessung weisen Lasertracker des Standes der Technik zumindest einen Distanzmesser auf, wobei dieser z. B. als Interferometer (IFM) ausgebildet sein kann. Da solche Entfernungsmesseinheiten nur relative Distanzänderungen messen können, werden in heutigen Lasertrackern zusätzlich zu Interferometern sogenannte Absolutdistanzmesser (ADM) verbaut. Beispielsweise ist eine derartige Kombination von Messmitteln zur Entfernungsbestimmung durch das Produkt AT901 der Leica Geosystems AG bekannt. Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Sensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Lasertracker nach dem Stand der Technik weisen für eine fortlaufende Zielverfolgung regelmässig einen Tracking-Flächensensor in Form eines positionssensitiven Detektors (PSD) auf, wobei am Ziel reflektierte Messlaserstrahlung auf diesem detektiert werden kann. Als PSD ist in diesem Zusammenhang ein örtlich analog arbeitender Flächensensor zu verstehen, mit welchem ein Schwerpunkt einer Lichtverteilung auf der Sensorfläche bestimmt werden kann. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik kann das Ausgangssignal ausgewertet werden und der Schwerpunkt ermittelt werden. Die Ermittlung der Position des Schwerpunkts des auftreffenden Lichtpunkts kann dabei sehr schnell und mit einer sehr hohen Auflösung erfolgen. Allerdings kann mittels der PSD nur ein Schwerpunkt der Lichtverteilung ermittelt werden, und keine Verteilung mehrerer Lichtpunkte.

Mittels dieser PSD kann eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD vergleichsweise klein, d. h. korrespondierend zum Strahldurchmesser des Messlaserstrahls, gewählt.

Eine Erfassung mit der PSD erfolgt koaxial zur Messachse, sodass die Erfassungsrichtung der PSD der Messrichtung entspricht. Die Anwendung des PSD-basierten Trackings und der Feinanzielung kann erst erfolgen, nachdem der Messlaser auf ein retro-reflektierendes Ziel ausgerichtet worden ist.

Der beschriebenen Zielverfolgung muss ein Ankoppeln des Laserstrahls an den Reflektor vorausgehen. Hierzu kann am Tracker zusätzlich eine Erfassungseinheit mit einem weiteren positionssensitiven Sensor (PSD) mit einem verhältnismässig grossen Sichtfeld angeordnet sein. Zudem sind in gattungsgemässen Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder komplett zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 A1 bekannt.

Gängige Lasertracker weisen inzwischen standardmässig eine automatische Zielerfassungs- und Zielverfolgungs-Funktion für als Ziel-Reflektor dienende Prismen auf (ATR: "Automatic Target Recognition"). Dafür sind im Lasertracker gängigerweise eine separate ATR-Lichtquelle - z.B. ein Multimodefaserausgang, die optische Strahlung mit einer Wellenlänge im Bereich von 850 nm emittiert - und ein spezieller, für diese Wellenlänge sensitiver ATR-Detektor (z.B. CCD-Flächensensor) integriert. Zur Sicherstellung des Funktionierens der automatischen Anzielung basierend auf Auswertung der Position des Reflexflecks des am Prisma retro-reflektierten ATR-Messstrahls auf dem ATR-Flächensensor ist es typischerweise erforderlich, vor Funktionsstart die Anzieleinrichtung zumindest derart ungefähr auf den Ziel-Reflektor auszurichten, dass der retro-reflektierte ATR-Messstrahl auch auf dem ATR-Flächensensor auftrifft. Dafür kann z.B. zuvor eine manuelle Anzielung des Ziel-Reflektors basierend auf Augenmass erfolgen oder eine automatische Grobanzielfunktion ausgeführt werden.

Das manuelle, grobe Anvisieren des Zielobjekts kann benutzerseitig zum einen erfolgen, indem das Zielobjekt auf einem Benutzerdisplay der Anzeige-Steuereinheit direkt am Koordinatenmessgerät oder auf dem Display eines separaten Peripheriegerätes (z.B. Datenlogger als Fernsteuerung) betrachtet und angezielt wird. Oft erfolgt dies jedoch nach wie vor mittels Betrachten des Ziels durch ein Okular eines Zielfernrohrs (d.h. der Anzieleinrichtung), da im praktischen Einsatz - z.B. bei Sonneneinstrahlung - ein angezeigtes Display-Bild auf der Anzeige-Steuereinheit bzw. dem Datenlogger ungenügend erkennbar sein kann.

Probleme mit der automatischen Zielerfassungs- und Zielverfolgungs-Funktion können auftreten, wenn sich das Ziel derart ruckartig und schnell bewegt, dass es aus dem Sichtbereich des ATR-Detektors verschwindet (d.h. keine am Ziel reflektierte ATR-Messstrahlung mehr auf dem ATR-Flächensensor auftrifft). Um auch bei schnellen und ruckartigen Bewegungen das Ziel im "gekoppelten" Zustand zu halten und nicht zu aus dem Sichtbereich des ATR-Detektors zu verlieren, kann beispielsweise eine weitere (im sichtbaren Wellenlängenbereich sensitive) Kamera Bilder des Ziels aufnehmen und anhand von Bildverarbeitung Bewegungen des Ziels (bzw. Bewegungen von sich zusammen mit dem Ziel mitbewegenden Objekten) verfolgen, und dadurch im Falle eines Verlierens des Ziels aus dem "gekoppelten" Zustand das Wiederauffinden und Wiederankoppeln des RetroReflektors erleichtern. Ein solches System wird z.B. in der EP 2 141 450 beschrieben.

Lasertracker messen auf Retroreflektoren, z.B. Hollow corner (CCR, mit 1.5", 7/8", 0.5" Durchmesser der Stahlkugel), Tripelprismen, N2 (Etalon) oder CatEye-Reflektoren. Dabei ist die Kenntnis des Reflektortyps erforderlich, da einerseits die Position der Würfelecke (im Kugelzentrum) gemessen und das Werkstück mit der Oberfläche der Kugel berührt wird und andererseits einige Reflektortypen (Tripelprismen/Cateye) eine von Null abweichende Additionskonstante haben. Insbesondere bei Kompensationsmessungen ist es wichtig, dass der richtige Reflektortyp verwendet wird.

Lasertracker aus dem Stand der Technik haben den Nachteil, dass der verwendete Reflektor jeweils manuell in der Software eingegeben werden muss, was z.B. bei Messungen über grössere Distanzen oder auf mehrere unterschiedliche Zielobjekte, einen beträchtlichen Arbeits- und Zeitaufwand bedeutet, z.B. wenn noch nicht korrekt erfasste Zielobjekte erst manuell verifiziert werden müssen.

Ein wesentlicher Nachteil von herkömmlichen Lasertrackern und Zielobjekten ist insbesondere eine ungenügende Robustheit gegen eine falsche Identifikation des Zielobjekts (z.B. des Reflektor-Typs), beispielsweise im Fall von mehreren sich im Sichtfeld befindenden Zielobjekten. Zudem erweist sich bei einigen bekannten Lasertrackern des Standes der Technik das aufwendige Übermitteln der Zielobjekt-Identitäten von den jeweiligen Zielobjekten an den Lasertracker als nachteilig.

Die US 2007/0267498 A1 betrifft einen Lasertracker zur industriellen Vermessung, wobei Ziele sowohl durch eine Lasereinheit und eine Photogrammetrie-Einheit des Lasertrackers erfasst werden. Es werden kodifizierte Ziele verwendet, welche durch beide Einheiten erkannt werden können. Beispielsweise befinden sich mehrere Ziele an unterschiedlichen vorbestimmten Messorten und durch die Kodierung wird sichergestellt, dass Messungen durch die Lasereinheit bzw. die Photogrammetrie-Einheit jeweils korrekt den vorbestimmten Messorten zugeordnet werden.

Die WO 2012/141810 A1 betrifft einen Lasertracker zur industriellen Vermessung, wobei schwach oder nicht reflektierende Übergänge zwischen den (Tripel-)Spiegeln eines Retroreflektors genutzt werden, um eine 6-DoF Orientierung des Retroreflektors abzuleiten. Ferner wird eine Erkennung eines Barcodemusters oder eine Erkennung über die RFID-Technologie zur Identifizierung von Zielobjekteigenschaften offenbart.

Die DE102010024014 A1 betrifft ein Ziel aufweisend ein Kennelement, welches zwischen wenigstens zwei optischen Zuständen umschaltbar ist.

Es ist eine Aufgabe der Erfindung, ein robusteres und weniger fehleranfälliges Koordinatenmesssystem zur Verfügung zu stellen.

Eine weitere Aufgabe der Erfindung liegt zudem darin, ein Koordinatenmessgerät und ein Zielobjekt für eine effizientere und vereinfachte Koordinatenvermessung zur Verfügung zu stellen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Ein Aspekt der Erfindung betrifft eine Verwendung eines nicht als Teil der Erfindung angesehenen Zielobjekts für ein Koordinatenmessgerät, insbesondere Lasertracker, wobei das Zielobjekt ein retroreflektives Element umfasst, welches im Rahmen einer Koordinatenmessung des Zielobjekts mit einem optischen Messstrahl des Koordinatenmessgeräts verwendet werden kann. Das Zielobjekt umfasst ferner ein für das Koordinatenmessgerät sichtbares und erfassbares Identifikationselement, wobei das Identifikationselement mindestens ein Element der folgenden Gruppe umfasst: ein retroreflektierendes Identifikationselement, welches nur Strahlung einer definierten zumindest einen bestimmten Wellenlängenbereich abdeckenden ID-Farbe retroreflektiert, ein eine definierte und zumindest einen bestimmten Wellenlängenbereich abdeckende ID-Farbe aufweisendes Identifikationselement, und ein ein definiertes ID-Muster aufweisendes Identifikationselement, insbesondere aus retroreflektierendem Material.

Im Speziellen ist das Identifikationselement bezüglich einer im Rahmen der Koordinatenmessung definierten Zielachse des Koordinatenmessgeräts rotations-asymmetrisch ausgebildet. Diese Ausführungsform hat den Vorteil, dass das Identifikationselement ebenfalls zur Erfassung der räumlichen Ausrichtung des Zielobjekts und/oder zur Groblokalisierung des Zielobjekts herangezogen werden kann.

Die Erfindung betrifft ein Koordinatenmessgerät, ausgebildet als Lasertracker zur industriellen Vermessung, zum Erfassen einer Position eines im Raum bewegbaren, einen Retroreflektor aufweisenden Zielobjekts, beispielsweise Zielobjekts wie oben beschrieben, wobei das Koordinatenmessgerät mindestens aufweist eine Strahlungsquelle zur Emission eines optischen Messstrahls, wobei der Messstrahl mittels einer Strahllenkeinheit in eine definierte Raumrichtung emittiert wird und dadurch eine Zielachse definiert, eine Entfernungsmessfunktionalität zur Bestimmung einer Distanz zum Zielobjekt mittels des Messstrahls, eine Winkelmessfunktionalität zur Bestimmung einer Emissionsrichtung des Messstrahls, eine Zielverfolgungsfunktionalität zur fortlaufenden Verfolgung des Zielobjekts, und eine Auswerte- und Steuereinheit zur Datenspeicherung und Steuerung des Koordinatenmessgeräts. Als Strahlungsquelle kann insbesondere eine HeNe-Laserlichtquelle oder eine Laserdiodenquelle verwendet werden. Der Messstrahl kann für verschiedene Funktionalitäten genutzt werden und beispielsweise auch aus einer koaxialen oder parallelen Kombination mehrerer Komponenten (Einzelstrahlen) bestehen, beispielsweise aus einem infraroten Lasermessstrahl für die Entfernungs- und Winkelmesseinheit, einem (visuellen) Pointingstrahl, z.B. als visuelle Unterstützung für einen Operator, und einer separaten Zielverfolgungskomponente.

Die Entfernungsmesseinheit ist typischerweise als Laserdistanzmesser ausgebildet, z.B. mittels Laufzeit- oder Phasendifferenzmessung oder mittels des Fizeau-Prinzips. Insbesondere kann die Entfernungsmesseinheit auch als Absolutdistanzmesser ausgebildet sein. Beispielsweise sind derartige Distanzmesser durch das Produkt AT901 der Leica Geosystems AG bekannt und eine Kombination eines Absolutdistanzmessers und eines Interferometers zur Entfernungsbestimmung mit einem HeNe-Laser ist beispielsweise aus der WO 2007/079600 A1 bekannt.

Der Messstrahl wird an einem Zielobjekt reflektiert, wobei der reflektierte Strahl mit einer Erfassungseinheit des Koordinatenmessgeräts erfasst wird. Hierbei wird eine Emissions- bzw. Empfangsrichtung des Strahls ermittelt, beispielsweise mittels Sensoren zur Winkelmessung, insbesondere Winkelencodern.

Der Messstrahl wird im Rahmen einer automatischen Zielerfassungsfunktionalität an einen Retroreflektor eines Zielobjekts angekoppelt. Hierzu wird eine separate (zweckbestimmte) Zielerfassungskamera, beispielsweise mit einem positionssensitiven Sensor mit einem verhältnismässig grossen Sichtfeld oder ein eingangs erwähnter ATR-Detektor, verwendet. Zudem sind in gattungsgemässe Geräte oft zusätzliche Beleuchtungsmittel integriert, insbesondere zur Erzeugung einer Erfassungsstrahlung mit einer definierten, sich von der Wellenlänge der Distanzmessmittel unterscheidenden Wellenlänge. Der Sensor kann in diesem Zusammenhang sensitiv auf einen Bereich um diese bestimmte Wellenlänge ausgebildet sein, um beispielsweise Fremdlichteinflüsse zu reduzieren oder komplett zu verhindern.

Im Rahmen der Zielverfolgungsfunktionalität wird - in modernen Systemen zunehmend standardisiert - auf einem Sensor beispielsweise eine Ablage des empfangenen Strahls von einer Nullposition ermittelt. Mittels dieser so messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung eines Reflektorzentrums ausgerichtet ist. Durch das Nachführen der Laserstrahlausrichtung kann eine fortlaufende Zielverfolgung (Tracking) des Zielobjekts erfolgen und die Entfernung und Position des Zielobjekts fortlaufend relativ zum Koordinatenmessgerät bestimmt werden. Das Nachführen kann dabei mittels einer Ausrichtungsänderung eines motorisiert bewegbaren, zur Ablenkung des Laserstrahls vorgesehenen Ablenkspiegels und/oder durch ein Schwenken einer Anzieleinheit, die die strahlführende Laseroptik aufweist, realisiert werden.

Insbesondere können die Zielerfassungsfunktionalität, die Zielverfolgungsfunktionalität und die Entfernungs- und Winkelmessfunktionalität beispielsweise durch jeweils separate zweckbestimmte Detektoren und/oder Kameras mit entsprechender Kameraoptik bereitgestellt werden oder ein oder mehrere Detektoren und/oder Kameras können derart ausgebildet und verwendet werden, dass damit mehrere der obigen Funktionalitäten durchführbar sind.

Die Auswerte- und Steuereinheit erfasst und verarbeitet die Messwerte verschiedener Sensoren, beispielsweise einer Distanzmessvorrichtung, Winkelencoder zur Bestimmung einer relativen oder absoluten Achslage, und steuert Achslagemotoren zur Ausrichtung der Strahllenkeinheit.

Das erfindungsgemässe Koordinatenmessgerät weist ferner eine Zielobjekt-Datenbasis auf, gespeichert auf der Auswerte- und Steuereinheit, welche Informationen für einen Satz von einzelnen Zielobjekten bereitstellt, mindestens umfassend jeweils den einzelnen Zielobjekten zugeordnete Spezifikationen, und jeweils den einzelnen Zielobjekten zugeordnete voneinander eindeutig unterscheidbare und zumindest einen bestimmten Wellenlängenbereich abdeckende ID-Farben, wobei jeweils genau eine ID-Farbe genau einem Zielobjekt zugeordnet ist; eine für das Spektrum der Wellenlängenbereiche der ID-Farben empfindliche Kamera, nachfolgend ID-Kamera genannt, insbesondere basierend auf einem CCD- oder CMOS-Sensor, beispielsweise mit einer Blickrichtung im Wesentlichen entlang der Zielachse; und Beleuchtungsmittel zur Beleuchtung eines Zielobjekts mit einer das Spektrum der Wellenlängenbereiche der ID-Farben abdeckenden Identifikationsstrahlung, beispielsweise durch weisses Licht und/oder einzelne ID-Farben beinhaltende Farb-LEDs.

Eine (ID-)Farbe, respektive ein eine (ID-)Farbe definierender Wellenlängenbereich (oder allgemein ein Wellenlängenbereich), kann beispielsweise definiert sein basierend auf Strahlung einer einzelnen scharf begrenzten Wellenlänge; und/oder basierend auf Strahlung eines einzelnen (zusammenhängenden) Spektralbereichs; und/oder basierend auf einem Spektrum von sich gegebenenfalls anschliessenden oder beabstandeten Wellenlängenbereichen. Insbesondere definiert eine Mischung und/oder Kombination von mehreren Wellenlängenbereichen eine "Mischfarbe", d.h. also wiederum eine "Farbe" im Sinne einer ID-Farbe, sofern sich eine so erzeugte (Misch-)ID-Farbe für die ID-Kamera hinreichend von den anderen (Ursprungs-)ID-Farben unterscheidet und von der ID-Kamera als eigene Farbe erkannt wird.

Gemäss der vorliegenden Erfindung wird im Rahmen einer Identifikationsfunktionalität automatisch gesteuert durch die Auswerte- und Steuereinheit ein zu identifizierendes Zielobjekt mit der Identifikationsstrahlung angestrahlt, wobei eine Bestimmung einer ID-Farbe für das Zielobjekt erfolgt, basierend auf einer mit der ID-Kamera erfassten Aufnahme des Zielobjekts, eine automatische Identifizierung des Zielobjekts erfolgt, basierend auf der ID-Farbe des Zielobjekts, und wobei eine automatische Zuordnung der zugehörigen Spezifikationen zum Zielobjekt erfolgt, basierend auf den durch die Zielobjekt-Datenbasis bereitgestellten Informationen.

Insbesondere kann eine bereits im System vorhandene Kamera derart angepasst werden, dass sie beispielsweise auch als ID-Kamera verwendet werden kann, beispielsweise:
- eine Erfassungskamera für die Erfassung des Messstrahls für die Entfernungsmess- und/oder Winkelmessfunktionalität,
- eine Zielerfassungskamera für die Zielerfassungsfunktionalität,
- eine Zielverfolgungskamera für die Zielverfolgungsfunktionalität, und
- eine Kamera zur Bereitstellung eines Übersichts-Bildes für einen Benutzer.

Das Koordinatenmessgerät weist eine Zielerfassungsfunktionalität zur Ausrichtung des Messstrahls auf das Zielobjekt auf, mit einer Regelungseinrichtung für eine automatische Suche und Erfassung des Zielobjekts, wobei die Zielerfassungsfunktionalität mittels einer im Rahmen der Zielerfassungsfunktionalität in einem definierten Wellenlängenbereich bereitgestellten Erfassungsstrahlung erfolgt, insbesondere erzeugt durch die die Identifikationsstrahlung erzeugenden Beleuchtungsmittel oder durch zusätzliche Zielerfassungsbeleuchtungsmittel, wobei die Zielerfassungsfunktionalität mittels einer zweckbestimmten Zielerfassungskamera erfolgt und die Erfassungsstrahlung in einem definierten Wellenlängenbereich ausserhalb des Spektrums der Wellenlängenbereiche der ID-Farben bereitgestellt wird, wobei die Zielerfassungskamera unempfindlich ist für Strahlung des Spektrums der Wellenlängenbereiche der ID-Farben.

Je nach Ausführungsform der Beleuchtungsmittel und/oder der verwendeten Kameras, kann das Zielobjekt gleichzeitig oder auch abwechselnd mit der Identifikationsstrahlung und der Erfassungsstrahlung beleuchtet werden, beispielsweise wobei die Identifikationsbeleuchtungsmittel nur für die Identifizierung des erfassten Zielobjekts eingeschaltet werden.

Die Beleuchtungsmittel für die Identifikationsstrahlung und die Erfassungsstrahlung können je nach Ausführungsform durch separat ansteuerbare Beleuchtungskomponenten, beispielsweise unterschiedliche LEDs, gegeben sein oder sie können beispielsweise als eine einzige Beleuchtungskomponente aufgebaut sein, welche insbesondere je nach aktuellem Verwendungszweck unterschiedliche Strahlung bereitstellen kann.

Beispielsweise kann für die Zielerfassungskamera ein geeigneter nur im Spektrum der Wellenlängenbereiche der ID-Farben sensitiver Detektor oder ein entsprechender Kamerafilter in der Eintrittsoptik der Kamera verwendet werden.

Eine weitere Ausführungsform ist dadurch gekennzeichnet, dass der Intensitätsdetektor in mindestens einer der folgenden Funktionen verwendet wird: als zweckbestimmter Identifikationsdetektor des Koordinatenmessgeräts, als Empfänger der Entfernungsmessfunktionalität, insbesondere wobei der Intensitätsdetektor im Rahmen von mindestens einer der folgenden Entfernungsmess-Einheiten verwendet wird: einer Einheit zur Laufzeitmessung, einer Interferometer-Einheit, einer WFD-Einheit, einer FMCW-Einheit, einer Frequency-Comb-Einheit, einer Phasendistanzmess-Einheit, und einer Fizeau-Absolutdistanzmesseinheit, als Trackingdetektor der Zielverfolgungsfunktionalität, insbesondere ausgebildet als positionssensitiver Detektor (PSD), als Zielerfassungsdetektor einer Zielerfassungsfunktionalität des Koordinatenmessgeräts zur Ausrichtung des Messstrahls auf das Zielobjekt, als Zielerfassungsdetektor einer Stereo-Zielerfassungsfunktionalität des Koordinatenmessgeräts zur Ausrichtung des Messstrahls auf das Zielobjekt und zur Bestimmung einer Distanz zum Zielobjekt.

Der Flächendetektor kann in mindestens einer der folgenden Funktionen verwendet werden: als zweckbestimmter Identifikationsdetektor des Koordinatenmessgeräts, als Trackingdetektor der Zielverfolgungsfunktionalität, insbesondere ausgebildet als positionssensitive CCD- oder CMOS-Kamera, als Zielerfassungsdetektor einer Zielerfassungsfunktionalität des Koordinatenmessgeräts zur Ausrichtung des Messstrahls auf das Zielobjekt, als Zielerfassungsdetektor einer Stereo-Zielerfassungsfunktionalität des Koordinatenmessgeräts zur Ausrichtung des Messstrahls auf das Zielobjekt und zur Bestimmung einer Distanz zum Zielobjekt, als Kamera zur Bereitstellung eines Übersichts-Bildes für einen Benutzer.

Das erfindungsgemässe Koordinatenmessgerät wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1:: Beispiel für eine typische Anwendung eines erfindungsgemässen Koordinatenmessgeräts in der industriellen Vermessung;
- Fig. 2:: schematischer äusserer Aufbau eines beispielhaften Koordinatenmessgeräts;
- Fig. 3a,b:: schematischer Aufbau zweier erfindungsgemässer Koordinatenmessgeräte mit einer (a) oder mehrerer (a) Strahlquellen zur Erzeugung eines Messstrahls und eines Trackingstrahls sowie mit einer (a) oder mehrerer (b) spezifischen Kameras;
- Fig. 4a-d:: schematischer Aufbau typischer Zielobjekte mit Identifikationselementen für eine passive (a-c) oder aktive (d) Identifikation;
- Fig. 5a,b:: schematischer Aufbau eines nicht als Teil der Erfindung angesehenen Koordinatenmessgeräts (a) und eine beispielhafte mit der ID-Kamera erfasste Abbildung des Zielobjekts (b) für eine Identifikation eines Zielobjekts ohne spezifisch am Zielobjekt angebrachtes Identifikationselement;
- Fig. 6:: schematischer Aufbau einer nicht als Teil der Erfindung angesehenen Kalibration eines System-Clocks für einen Treiber einer Distanzmessung eines Distanzmessmoduls eines Koordinatenmessgeräts.

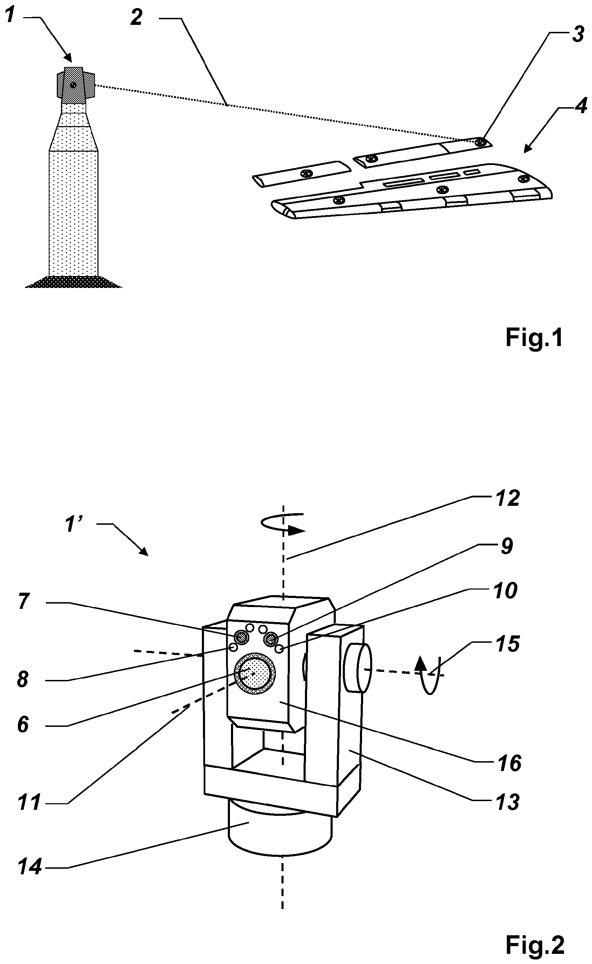

**Figur 1** zeigt eine beispielhafte Ausführungsform eines Koordinatenmessgeräts 1, hier ausgebildet als Lasertracker in der industriellen Vermessung, um mit einem scannenden Lasermessstrahl 2 Oberflächen von hergestellten Gegenständen 4 abzutasten und deren räumliche Dimensionen in Form von Koordinaten zu bestimmen. Oft wird hierbei beispielsweise vermittels mehreren am vermessenden Objekt 4 angebrachten Zielobjekten mit Retroreflektoren 3 für den Lasermesstrahl 2 des Lasertrackers 1 gemessen.

Um Bewegungen des zu vermessenden Objekts zu erkennen und nachvollziehen zu können, sodass der Lasermessstrahl 2 auf dem Retroreflektor 3 ausgerichtet bleibt, weist der Lasertracker 1 eine Zielerfassungseinheit und eine Zielverfolgungseinheit auf, um eine fortlaufende Zielverfolgung (Tracking) eines vom Lasertracker 1 mit dem Laserstrahl 2 erfassten Retroreflektors 3 zu gewährleisten und so die Entfernung und Position des Zielpunkts fortlaufend relativ zum Lasertracker 1 bestimmt werden kann.

Die Kenntnis des Typs eines aktuell erfassten Retroreflektors ist erforderlich, da der Retroreflektor 3 einerseits typischerweise einen bekannten, je nach Montierungsart unterschiedlichen, Versatz zur effektiv zu vermessenden Position aufweist. Andererseits weisen unterschiedliche Reflektortypen, z.B. Tripelprismen, Cateye, unterschiedliche optische Korrekturfaktoren auf, beispielsweise eine von Null abweichende Additionskonstante. Insbesondere bei Kompensationsmessungen ist es wichtig, dass der richtige Reflektortyp erkannt und im Rahmen einer Messung mit dem Koordinatenmessgerät 1 die korrekten optischen Spezifikationen und Kompensationsparameter angewendet werden.

**Figur 2** zeigt schematisch den äusseren Aufbau eines beispielhaften Lasertrackers 1' mit den Elementen Ein- und Austrittsoptik 6, eine Zielerfassungskamera 7 mit Anzielbeleuchtungsmitteln 8, hier mittels zwei Lichtquellen an zwei Seiten der Eintrittsoptik der Zielerfassungskamera 7, sowie einer Übersichtskamera 9 mit Übersichtsbeleuchtungsmitteln 10, hier ebenfalls mit zwei einzelnen Lichtquellen an zwei Seiten der Eintrittsoptik der Übersichtskamera 9. Ferner sind gezeigt: die Zielachse 11, eine Schwenkachse 12, um welche die Stütze 13 bezüglich einer Basis 14 drehbar ist, und eine Kippachse 15, um welche die Strahllenkeinheit 16 bezüglich der Stütze 13 neigbar ist.

Eine Regelungs- und Steuerungseinheit (hier nicht dargestellt) erfasst und verarbeitet die Messwerte verschiedener Sensoren, beispielsweise einer Distanzmessvorrichtung, Winkelencoder zur Bestimmung einer relativen oder absoluten Achslage, und steuert Achslagemotoren zur Ausrichtung der Strahllenkeinheit 16. Eine Anzeigevorrichtung (nicht dargestellt) zeigt Informationen über Messungen und den Gerätezustand und kann auch Bilder von einem der vorhandenen Bildsensoren, insbesondere der Übersichtskamera 9, anzeigen. Die Zielerfassungskamera 7 kann alternativ auch mehr als eine Optik aufweisen.

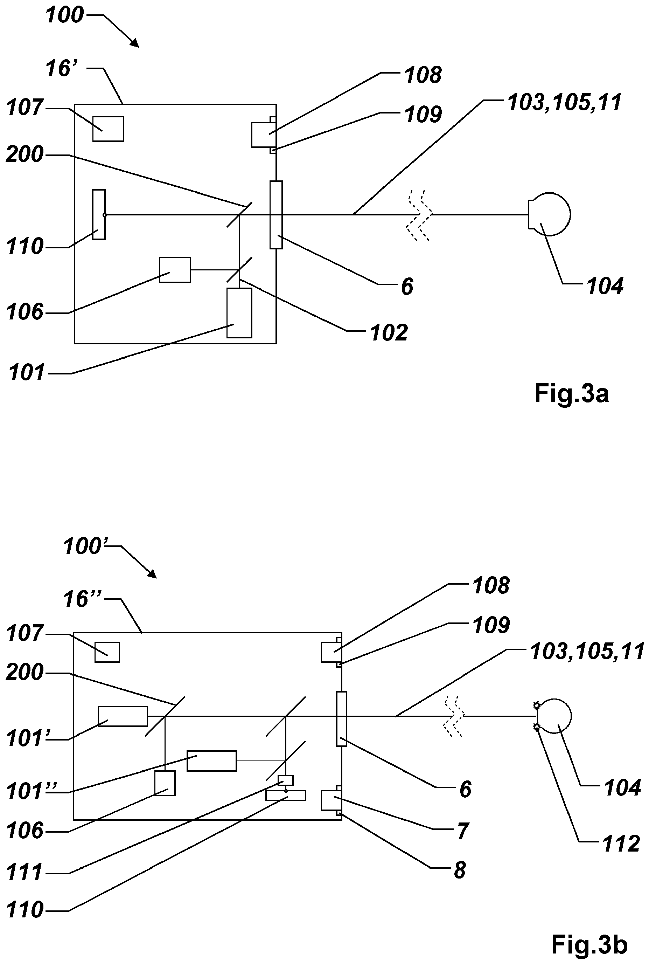

Die Figuren 3a und 3b illustrieren anhand eines schematischen Aufbaus verschiedene Ausführungsformen eines erfindungsgemässen Koordinatenmessgeräts.

**Figur 3a** zeigt ein erfindungsgemässes Koordinatenmessgerät 100 mit einer Strahllenkeinheit 16' umfassend eine Strahlquelle 101, deren Strahlung 102 sowohl als Messstrahlung 103 zur Ermittlung der Entfernung zum Zielobjekt 104 als auch als Trackingstrahl 105 zur Zielverfolgung verwendet wird. Ferner weist das Koordinatenmessgerät 100 eine Auswerte- und Steuereinheit 107 zur Datenspeicherung und Steuerung des Koordinatenmessgeräts 100 auf, hier z.B. ebenfalls angeordnet in der Strahllenkeinheit 16'.

Die Strahllenkeinheit 16' verfügt an seiner dem Zielobjekt 104 zugewandten Vorderseite über eine Ein- und Austrittsoptik 6 zur Aussendung von Strahlung entlang der Zielachse 11 und zum Einlass reflektierter Strahlung, sowie über eine Identifikations-Kamera, nachfolgend ID-Kamera 108 genannt, mit Identifikationsbeleuchtungsmitteln 109, hier beispielsweise ausgestaltet als zwei LED-Lichtquellen an zwei Seiten der Eintrittsoptik der ID-Kamera 108, wobei als ID-Kamera 108 beispielsweise eine entsprechend angepasste Zielerfassungskamera verwendet wird, welche gegebenenfalls auch als Übersichtskamera zur Bereitstellung eines Übersichtsbildes für einen Benutzer vorgesehen ist.

Im gezeigten Beispiel stellen die Identifikationsbeleuchtungsmittel 109 eine ein Spektrum von Wellenlängenbereichen abdeckende Identifikationsstrahlung, sowie eine Erfassungsstrahlung in einem definierten Wellenlängenbereich ausserhalb des Spektrums der Identifikationsstrahlung bereit.

Alternativ können auch separate weitere spezifische Kameras als Zielerfassungskamera und/oder Übersichtskamera verwendet werden (siehe z.B. Fig. 3b) und/oder separate Beleuchtungsmittel für die Erzeugung der Identifikationsstrahlung und der Erfassungsstrahlung, insbesondere wobei die Beleuchtungsmittel Strahlung unterschiedlicher Wellenlängenbereiche erzeugen oder die Kameras eine unterschiedliche wellenlängenabhängige Empfindlichkeit aufweisen. Weiter kann durch die Auswerte- und Steuereinheit 107 auch eine Abbildung erfasst mit einer für mehrere Funktionen benutzten Kamera, beispielsweise wie hier die ID-Kamera 108, welche gleichzeitig als Zielerfassungskamera verwendet wird, mittels Bildbearbeitung für einen jeweiligen Zweck optimiert werden, insbesondere hinsichtlich einer Identifikation eines erfassten Zielobjekts 104 oder einer Zielerfassung eines Zielobjekts 104.

Die Kameraoptik der ID-Kamera 108 kann insbesondere als Fixfokus-Objektiv mit unveränderlichem Fokus und unveränderlichem Zoom oder als Vario-Optik ausgestaltet sein.

Die Strahllenkeinheit 16' weist in ihrem Innern ferner eine Distanzmessvorrichtung 106 zum Empfang der reflektierten Messstrahlung 103 und zum Ermitteln einer Distanz zu einem Zielobjekt 104 auf. Die Distanzmessvorrichtung 106 ist im gezeigten Beispiel ein Absolutdistanzmessgerät, kann aber auch ein Interferometer, oder eine Kombination von beiden sein.

Ferner weist hier die Strahllenkeinheit 16' einen flächigen Trackingdetektor 110 zum Empfang des am Zielobjekt 104 reflektierten Trackingstrahls 105 und zur Erzeugung eines Ausgangssignals zur Steuerung einer Zielverfolgungsfunktionalität des Koordinatenmessgeräts 100 auf.

Vorzugsweise verlaufen die optischen Achsen des Trackingsstrahls 105 und der Messstrahlung 103 ausserhalb des Koordinatenmessgeräts 100 koaxial zueinander und zur Zielachse 11, also auf einer gemeinsamen Emissionsachse wie hier dargestellt. Alternativ sind aber auch Ausführungsformen möglich mit einer parallelen Anordnung der Achsen oder auch eine Anordnung, wobei die Achsen nur annähernd parallel zueinander verlaufen, beispielsweise nur hinsichtlich einer Fernnäherung bei Messungen über grosse Distanzen.

Obwohl hier nicht dargestellt, kann das Koordinatenmessgerät 100 und/oder die Strahllenkeinheit 16' natürlich auch weitere für Koordinatenmessgeräte zur Zielverfolgung typische Komponenten enthalten, beispielsweise eine zusätzliche Übersichtskamera, zusätzliche Beleuchtungsmittel, eine Zoom- oder Variokamera, fixe oder schaltbare Filtervorrichtungen für Kameras, eine Pointer-Strahlquelle, etc.

Darüber hinaus weist die Strahllenkeinheit 100 eine Anzahl an Strahlteilern 200 auf, über die die Messstrahlung 103 und der Trackingstrahl 105 entlang der Zielachse 11 durch die Ein- und Austrittsoptik 6 emittiert werden und über die die vom Zielobjekt 104 reflektierte Strahlung auf die Distanzmessvorrichtung 106 und die Sensoroberfläche des Trackingdetektors 110 geleitet wird.

**Figur 3b** zeigt eine weitere Ausführungsform eines erfindungsgemässen Koordinatenmessgeräts 100', wobei hier eine Strahllenkeinheit 16" eine erste Strahlungsquelle 101' zur Erzeugung einer Messstrahlung 103, sowie eine zweite Strahlungsquelle 101" zur Erzeugung eines Trackingstrahls 105 umfasst. Ferner weist das Koordinatenmessgerät 100' eine Auswerte- und Steuereinheit 107 zur Datenspeicherung und Steuerung des Koordinatenmessgeräts 100' auf, hier z.B. ebenfalls angeordnet in der Strahllenkeinheit 16".

Die Strahllenkeinheit 16" verfügt an seiner dem Zielobjekt 104 zugewandten Vorderseite über eine Ein- und Austrittsoptik 6 zur Aussendung von Strahlung entlang der Zielachse 11 und zum Einlass reflektierter Strahlung, sowie über eine Identifikations-Kamera, nachfolgend ID-Kamera 108 genannt, mit Identifikationsbeleuchtungsmitteln 109, hier beispielsweise ausgestaltet als zwei LED-Lichtquellen an zwei Seiten der Eintrittsoptik der ID-Kamera 108, wobei die ID-Kamera auch als Übersichtskamera zur Bereitstellung eines Übersichtsbildes für einen Benutzer vorgesehen ist. Weiter verfügt die Strahllenkeinheit 16" in der gezeigten Ausführungsform über eine separate Zielerfassungskamera 7 mit Anzielbeleuchtungsmitteln 8, hier beispielsweise ausgestaltet als zwei LED-Lichtquellen an zwei Seiten der Eintrittsoptik der Zielerfassungskamera 7.

In ihrem Innern weist die Strahllenkeinheit 16" eine Distanzmessvorrichtung 106 zum Empfang der reflektierten Messstrahlung 103 und zum Ermitteln einer Distanz zu einem Zielobjekt 104 auf. Die Distanzmessvorrichtung 106 ist im gezeigten Beispiel ein Absolutdistanzmessgerät, kann aber auch ein Interferometer, oder eine Kombination von beiden sein.

Ferner weist die Strahllenkeinheit 16" einen Trackingdetektor 110 zum Empfang des am Zielobjekt 104 reflektierten Trackingstrahls 105 auf, beispielsweise mit einer Bestimmung eines Auftreffpunkts der reflektierten Trackingstrahlung auf einem positionssensitiven Detektor, und zur Erzeugung eines Ausgangssignals zur Steuerung einer Zielverfolgungsfunktionalität des Koordinatenmessgeräts 100' .

Vorzugsweise verlaufen die optischen Achsen des Trackingsstrahls 105 und der Messstrahlung 103 (welche auch identisch sein können) ausserhalb des Koordinatenmessgeräts 100' koaxial zueinander und zur Zielachse 11, also auf einer gemeinsamen Emissionsachse wie hier dargestellt. Dies setzt voraus, dass die beiden Strahlquellen 101',101" eine gemeinsame Austrittsoptik 6 aufweisen. Eine gemeinsame Ein- und Austrittsoptik 6 zweier Strahlengänge bedeutet, dass die beiden Strahlengänge durch dasselbe optische Element, wie eine Linse oder eine Scheibe, aus dem Gerät in die Umgebung des Gerätes austreten oder aus der Umgebung des Gerätes in das Gerät eintreten. In der Regel sind dabei die Strahlengänge zumindest annähernd koaxial.

Darüber hinaus weist die Strahllenkeinheit 100' eine Anzahl an Strahlteilern 200 auf, über die die Messstrahlung 103 und der Trackingstrahl 105 entlang der Zielachse 11 durch die Ein- und Austrittsoptik 6 emittiert werden und über die die vom Zielobjekt 104 reflektierte Strahlung auf die Distanzmessvorrichtung 106 und die Sensoroberfläche des Trackingdetektors 110 geleitet wird.

Die Messstrahlung 103 und der Trackingstrahl 105 unterscheiden sich insbesondere hinsichtlich ihrer Polarität und/oder Wellenlänge so voneinander, dass durch eine entsprechende Ausgestaltung eines vor dem Trackingdetektor 110 positionierten Filters 111 die für die Entfernungsmessung bestimmte reflektierte Strahlung herausgefiltert wird und nicht zum Trackingdetektor 110 gelangt. Ebenso kann so eventuell auftretende externe Störstrahlung herausgefiltert werden, sodass nur Strahlung des Trackingstrahls 105 auf den Sensor des Trackingdetektors 110 gelangt. Alternativ oder zusätzlich kann durch eine entsprechende Ausgestaltung der Strahlteiler 200 die Gesamtheit der reflektierten Strahlung in einen für die Distanzmessung bestimmten Anteil und einen für die Zielverfolgung bestimmten Anteil trennbar sein.

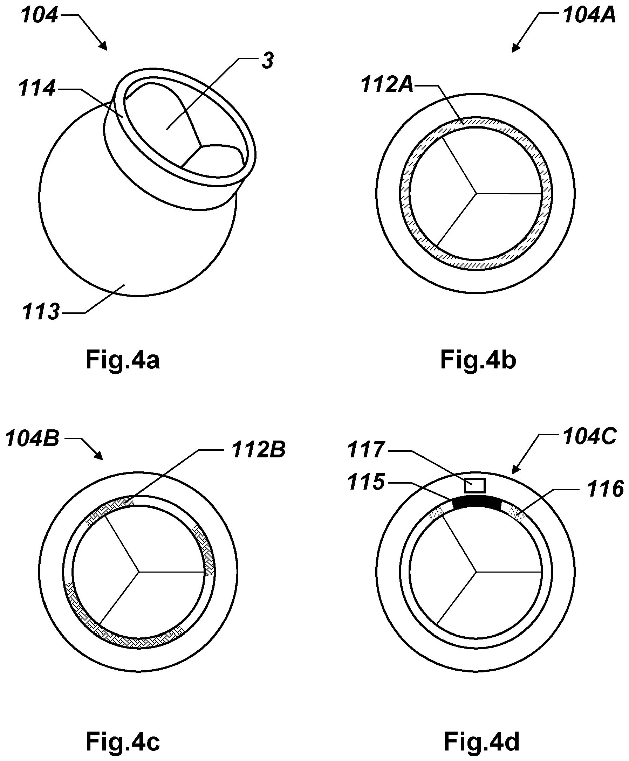

Ebenfalls angedeutet ist ein erfindungsgemässes Zielobjekt 104 mit Identifikationselementen 112, beispielsweise angeordnet auf dem Reflektorkragen des Retroreflektors des Zielobjekts 104. Beispielhafte Ausführungsformen von Identifikationselementen 112 werden in den Figuren 4a bis 4d dargestellt.

**Figur 4a** zeigt ein typisches Zielobjekt 104 mit einem Gehäuse 113, hier ausgebildet als Kugel, für einen Retroreflektor 3. Typische Zielobjekte mit Retroreflektoren umfassen beispielsweise "Hollow Corner" Retroreflektoren, Tripelprismen, Etalon-Reflektoren, oder "CatEye" Reflektoren. Bei Messungen mit einem erfindungsgemässen Koordinatenmessgerät 100,100' (siehe Figuren 3a und 3b) ist die Kenntnis des Reflektortyps erforderlich, da einerseits die Position der Würfelecke (hier im Kugelzentrum) gemessen und z.B. das zu vermessende Werkstück mit der Oberfläche der Kugel berührt wird, und andererseits einige Reflektortypen (Tripelprismen, CatEye) eine von Null abweichende Additionskonstante haben. Insbesondere bei Kompensationsmessungen ist es wichtig, dass der richtige Reflektortyp verwendet wird. Im Stand der Technik muss der verwendete Reflektor manuell eingegeben werden, was je nach Anwendung aufwendig und fehlerbehaftet sein kann.

Gemäss der vorliegenden Erfindung wird ein Zielobjekt 104 automatisch vom Koordinatenmessgerät 100,100' (siehe Figuren 3a und 3b) identifiziert. Dazu weist das Koordinatenmessgerät 100,100' eine Zielobjekt-Datenbasis auf, gespeichert auf der Auswerte- und Steuereinheit 107, welche Informationen für einen Satz von definierten Zielobjekten bereitstellt, mindestens umfassend einen Satz von Identifikationsmerkmalen und Spezifikationen für ein Zielobjekt.

Dabei weist ein nicht als Teil der Erfindung angesehenes Zielobjekt in einer speziellen Ausführungsform beispielsweise ein für das Zielobjekt spezifisches Identifikationselement auf, beispielsweise angeordnet auf dem Reflektorkragen 114, welches vom Koordinatenmessgerät 100,100' automatisch erkannt wird.

**Figur 4b** zeigt eine Frontalansicht eines nicht als Teil der Erfindung angesehenen Zielobjekts 104A in einer ersten Ausführungsform. Dabei stellt die Zielobjekt-Datenbasis des erfindungsgemässen Koordinatenmessgeräts 100,100' (siehe Figuren 3a, 3b) Informationen für einen Satz von definierten Zielobjekten bereit, mindestens umfassend einen Satz von definierten und bestimmte Wellenlängenbereiche abdeckenden ID-Farben mit zugehörigen Spezifikationen für ein Zielobjekt.

Mittels Identifikationsbeleuchtungsmittel 109 (siehe Figuren 3a, 3b) einer eine für das Spektrum der Wellenlängenbereiche der ID-Farben empfindlichen ID-Kamera 108 (siehe Figuren 3a und 3b) mit einer Blickrichtung entlang der Zielachse 11, insbesondere wobei die ID-Kamera 108 auch zur Bereitstellung eines Übersichts-Bildes für einen Benutzer vorgesehen ist, wird das Zielobjekt 104A mit einer das Spektrum der Wellenlängenbereiche der ID-Farben abdeckenden Identifikationsstrahlung angestrahlt, wobei das Zielobjekt 104A ein retroreflektierendes Identifikationselement 112A aufweist, hier angeordnet auf dem Reflektorkragen 114 (siehe Fig.4a) welches nur Strahlung eines eine ID-Farbe aus dem Satz von definierten ID-Farben definierenden Wellenlängenbereichs reflektiert.

Im Rahmen einer Zielerfassungsfunktionalität erfolgt eine automatische Erfassung, insbesondere auch Lokalisierung, des Zielobjekts 104A durch das Koordinatenmessgerät 100,100', welche durch die Auswerte- und Steuereinheit 107 zeitlich mit einer Bildaufnahme durch die ID-Kamera 108 verknüpft wird und wobei durch die Auswerte- und Steuereinheit 107 für das erfasste Zielobjekt 104A mittels Bildbearbeitung einer mit der ID-Kamera 108 erfassten Abbildung eine ID-Farbe bestimmt wird und eine automatische Identifizierung des erfassten Zielobjekts 104A erfolgt, basierend auf der bestimmten ID-Farbe des Zielobjekts 104A.

Ein allenfalls störender Einfluss des Identifikationselements 112A auf die Zielerfassungsfunktionalität, beispielsweise mittels Anzielbeleuchtungsmitteln und einer Zielerfassungskamera 7 (siehe Figs. 3a,3b) kann beispielsweise dadurch kompensiert werden, dass das Identifikationselement 112A nichtretroreflektiv ist für den Wellenlängenbereich einer Erfassungsstrahlung der Zielverfolgungsfunktionalität oder dass die Zielerfassungskamera 7 unempfindlich ist für Strahlung des Spektrums der Wellenlängenbereiche der ID-Farben.

Zudem kann die ID-Kamera 108 derart ausgestaltet sein, dass sie unempfindlich ist für Strahlung ausserhalb des Spektrums der Wellenlängenbereiche der ID-Farben.

Alternativ zu einem Identifikationselement 112A, welches nur Strahlung einer ID-Farbe reflektiert, kann das Identifikationselement selber in einer ID-Farbe ausgestaltet sein, beispielsweise aus einem retroreflektierenden Material.

**Figur 4c** zeigt eine Frontalansicht eines nicht als Teil der Erfindung angesehenen Zielobjekts 104B in einer weiteren, nicht-rotationssymmetrischen Ausführungsform des Identifikationselements 112B, hier ein ID-Muster aufweisend. Diese Ausführungsform hat den Vorteil, dass eine durch die ID-Kamera 108 (siehe Figs. 3a,3b) - oder durch eine alternative Kamera - erfasste Abbildung des Identifikationselements 112B mittels Bildbearbeitung durch die Auswerte- und Steuereinheit 107 ebenfalls zur Erfassung der räumlichen Ausrichtung des Zielobjekts 104B und/oder zur Groblokalisierung des Zielobjekts 104B herangezogen werden kann.

**Figur 4d** zeigt eine weitere nicht als Teil der Erfindung angesehene Ausführungsform eines Zielobjekts 104C, hier ein aktives Zielobjekt. In dieser Ausführungsform weist das nicht als Teil der Erfindung angesehene Koordinatenmessgerät eine Sendeeinheit zum Aussenden eines Abfragesignals mit einem ersten definierten Wellenlängenbereich auf, insbesondere modulierte Strahlung mit einer definierten Modulationsfrequenz, sowie eine für einen zweiten Wellenlängenbereich empfindliche Kamera mit einer Blickrichtung entlang der Zielachse zur Erfassung eines Antwortsignals mindestens eines Zielobjekts 104C, insbesondere wobei die Kamera auch zur Bereitstellung eines Übersichts-Bildes für einen Benutzer vorgesehen ist.

Die Zielobjekt-Datenbasis stellt Informationen bereit für einen Satz von definierten Zielobjekten, mindestens umfassend einen Satz von definierten Abfrage- und Antwortsignalen mit zugehörigen Spezifikationen für ein Zielobjekt 104C, wobei das Zielobjekt 104C eine für den ersten Wellenlängenbereich empfindliche Empfängereinheit 115 aufweist, sowie eine Sendeeinheit 116 zur Emission eines Antwortsignals mit einem definierten Wellenlängenbereich, welcher mindestens einen Teil des zweiten Wellenlängenbereichs umfasst und ein Antwortsignal des Zielobjekts 104C somit von der Kamera detektiert werden kann.

Das Zielobjekt 104C weist ferner eine Kontrollelektronik auf, hier z.B. einen Mikroprozessor 117, der sich in einem Stromsparmodus befindet, wobei der Mikroprozessor 117 mit einem für das Zielobjekt 104C spezifischen Aufwachsignal durch die Empfängereinheit 115 aktiviert werden kann um den Stromsparmodus zu verlassen.

Das Koordinatenmessgerät sendet beispielsweise ein für ein Zielobjekt 104C spezifisches Abfragesignal oder einen generellen Blinkcode. Das Zielobjekt 104C sendet daraufhin ein für das Zielobjekt 104C spezifisches Antwortsignal, wenn es das Abfragesignal oder den generellen Blinkcode empfängt. Das Koordinatenmessgerät kann somit Zielobjekte im Blickfeld seiner Kamera identifizieren oder ein spezifisches Zielobjekt direkt ansprechen.

Alternativ zu einer Identifizierung eines Zielobjekts mittels eines spezifisch am Zielobjekt angebrachten Identifikationselements oder eines Sendens und Empfangens von Abfrage- und Antwortsignalen, kann ein Zielobjekt und ein zugehöriger Reflektortyp gemäss einer nicht als Teil der Erfindung angesehenen Ausführungsform auch ohne Hilfsmittel am Zielobjekt identifiziert werden, beispielsweise mittels eines Auswertens von Messungen mit einem Intensitätsdetektor der Entfernungsmesseinheit, einem Auswerten einer Abbildung des reflektierten Trackingstrahls auf einem Trackingdetektor und/oder mittels einer Kamera, beispielsweise der ID-Kamera 108 (siehe Figs. 3a, 3b), erfassten Abbildung des Zielobjekts, welches durch eine punktförmige Lichtquelle angestrahlt wird, z.B. durch die Identifikationsbeleuchtungsmittel 109.

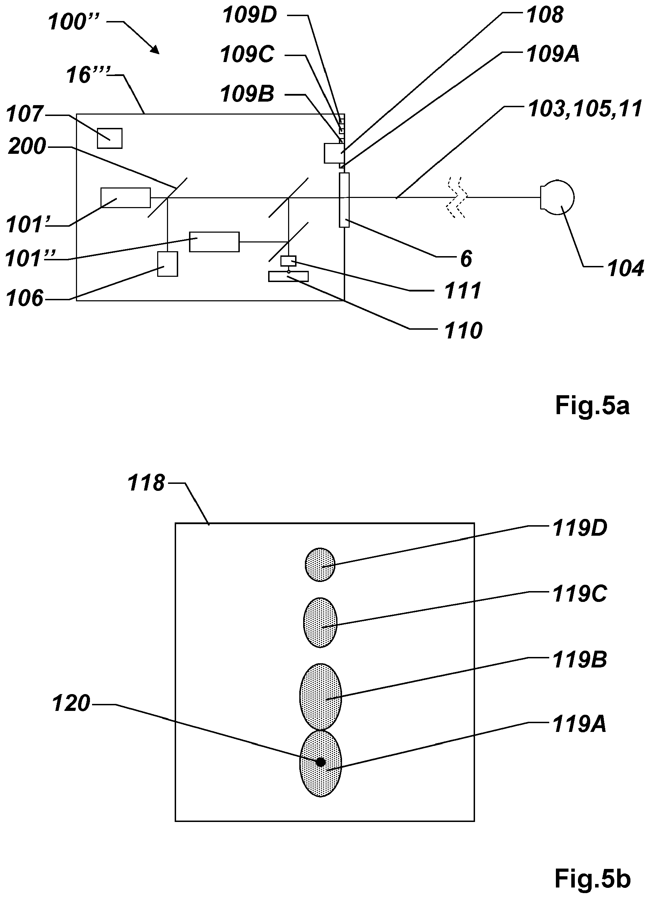

Die Figuren 5a und 5b illustrieren eine nicht als Teil der Erfindung angesehene Ausführungsform zur Identifizierung eines Zielobjekts 104 ohne dabei ein spezifisch am Zielobjekt 104 angebrachtes Identifikationselement zu verwenden.

**Figur 5a** zeigt eine schematische Ausführungsform eines nicht als Teil der Erfindung angesehenen Koordinatenmessgeräts 100" mit einer Strahllenkeinheit 16''', welche im Wesentlichen dieselben Komponenten und Elemente aufweist wie die Strahllenkeinheit gemäss Fig. 3b, hier allerdings ohne eine separate Zielerfassungskamera und ohne separate Anzielbeleuchtungsmittel. Im gezeigten Beispiel wird die ID-Kamera 108 gleichzeitig als Zielerfassungskamera und gegebenenfalls als Kamera zur Bereitstellung eines Übersichtsbildes für einen Benutzer verwendet (siehe z.B. auch die Beschreibung zu Fig. 3a).

Weiter verfügt das Koordinatenmessgerät 100" in dieser Ausführungsform über Identifikationsbeleuchtungsmittel, ausgestaltet als mehrere einzelne Lichtquellen, beispielsweise LEDs, welche an den Seiten der Eintrittsoptik der ID-Kamera 108 angebracht sind und einen unterschiedlichen lateralen Abstand zur optischen Achse der ID-Kamera 108 aufweisen. Im gezeigten Beispiel weist das Koordinatenmessgerät 100" vier separate Lichtquellen 109A,109B,109C,109D auf. Zwecks besserer Identifizierung und späterer Unterscheidung im Rahmen einer Bildbearbeitung einer mit der ID-Kamera 108 erfassten Abbildung der am Zielobjekt 104 reflektierten Strahlung der Identifikationsbeleuchtungsmittel können die unterschiedlichen Lichtquellen z.B. Strahlung in unterschiedlichen Wellenlängenbereichen erzeugen.

Mindestens eine der vier Lichtquellen der Identifikationsstrahlung, vorzugsweise eine derjenigen unmittelbar an der Seite der ID-Kamera 108, wird im gezeigten Beispiel zudem für die Zielerfassungsfunktionalität als Anzielbeleuchtungsmittel verwendet. Beispielsweise stellt diese Hauptlichtquelle 109A neben einer ein Spektrum von Wellenlängenbereichen abdeckenden Identifikationsstrahlung ebenfalls eine Erfassungsstrahlung in einem definierten Wellenlängenbereich ausserhalb des Spektrums der Identifikationsstrahlung bereit, wobei beispielsweise mittels einer schaltbaren Filterfunktionalität (nicht gezeigt) der ID-Kamera 108 die Empfindlichkeit der ID-Kamera 108 für Strahlung innerhalb und ausserhalb des Spektrums der Wellenlängenbereiche der Identifikationsstrahlung regelbar ist.

Die einzelnen Lichtquellen werden entweder gleichzeitig oder separat, beispielsweise sequentiell, eingeschaltet, um das Zielobjekt 104 anzustrahlen. Abhängig von der Distanz zwischen dem Koordinatenmessgerät 100" und dem Zielobjekt 104, einem lateralen Durchmesser des Retroreflektors des Zielobjekts 104 und dem lateralen Abstand zwischen dem Emissionspunkt (beispielsweise definiert durch die jeweiligen optischen Achsen) der Lichtquellen 109A,109B,109C,109D und der optischen Achse der ID-Kamera 108, wird das Zielobjekt 104 in einer mit der ID-Kamera 108 erfassten Abbildung mit einer für jede eingeschaltete Lichtquelle spezifischen Form und einer unterschiedlichen Position abgebildet.

**Figur 5b** zeigt eine beispielhafte mit der ID-Kamera 108 erfasste Abbildung 118 des Zielobjekts 104 für eine definierte Distanz des Koordinatenmessgeräts 100" zum Zielobjekt 104, unter Verwendung der Identifikationsbeleuchtungsmittel aus Fig. 5a. Für jede Lichtquelle wird das Zielobjekt 104 in der mit der ID-Kamera 108 erfassten Abbildung 118 in einer spezifischen Form und einer spezifischen Position abgebildet 119A,119B,119C,119D.

Das Koordinatenmessgerät 100" umfasst ferner eine Zielobjekt-Datenbasis, welche Informationen für einen Satz von definierten Zielobjekten bereitstellt, mindestens umfassend Identifikationsmerkmale und Spezifikationen für ein mit den Identifiktationsbeleuchtungsmitteln angestrahltes Zielobjekt, wobei die Identifikationsmerkmale mindestens die Position eines im Rahmen der Zielerfassungsfunktionalität erfassten Zielobjekts in einer Bildaufnahme 118 durch die ID-Kamera 104 umfassen, abhängig von einer Distanz zwischen dem Koordinatenmessgerät 100" und dem Zielobjekt, einem lateralen Durchmesser des Retroreflektors des Zielobjekts und einem lateralen Abstand zwischen einem Emissionspunkt der Identifikationsbeleuchtungsmittel 109A,109B,109C,109D und einer optischen Achse der ID-Kamera 108.

Im Rahmen einer Zielerfassungsfunktionalität erfolgt beispielsweise eine automatische Erfassung und eine Lokalisierung einer Referenzposition 120 des erfassten Zielobjekts 104, spezifisch für eine Bestrahlung des Zielobjekts 104 mit der Hauptlichtquelle 109A, welche durch die Auswerte- und Steuereinheit 107 (siehe Fig.5a) zeitlich mit einer Bildaufnahme 118 durch die ID-Kamera 108 verknüpft wird und wobei durch die Auswerte- und Steuereinheit 107 für das erfasste Zielobjekt 104 mittels Bildbearbeitung einer mit der ID-Kamera 108 erfassten Abbildung 118 beispielsweise eine für eine der Lichtquellen 109A,109B,109C,109D spezifisch abgebildete Form oder Position 119A,119B,119C,119D des abgebildeten Zielobjekts relativ zum Referenzpunkt 120 erkannt wird und, basierend auf einer mittels der Entfernungsmesseinheit bestimmten Distanz zwischen dem Koordinatenmessgerät 100" und dem lokalisierten Zielobjekt und der spezifisch abgebildeten Form oder Position des mit der ID-Kamera 108 abgebildeten Zielobjekts 119A,119B,119C,119D, eine automatische Identifizierung des erfassten Zielobjekts erfolgt, basierend auf der bestimmten Distanz und der bestimmten Position oder Form des lokalisierten Zielobjekts in der Bildaufnahme 118 durch die ID-Kamera 108.

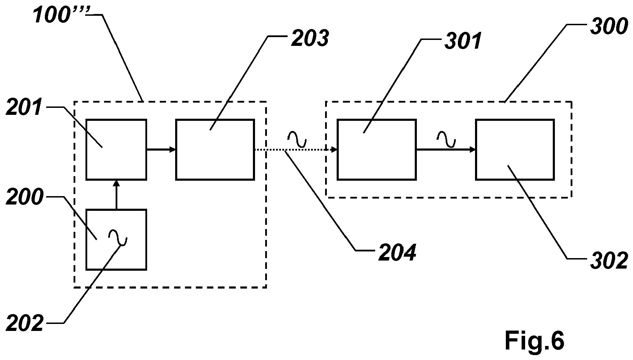

**Figur 6** zeigt eine nicht als Teil der Erfindung angesehene Kalibration eines System-Clocks 200 für einen Treiber 201 einer Distanzmessung eines Distanzmessmoduls eines Koordinatenmessgeräts 100‴, wie es beispielsweise in einem Lasertracker verwendet werden kann. Das zu kalibrierende Clock-Signal 202 des System-Clocks 200 des Koordinatenmessgeräts 100‴ wird auf einen beispielsweise durch eine Lichtquelle 203 des Distanzmessmoduls des Koordinatenmessgeräts bereitgestellten optischen Strahl 204 aufmoduliert, z.B. mittels Amplitudenmodulation.

Die Signalquelle kann insbesondere konfigurierbar sein und eine Ausgabe von mehreren zu kontrollierenden Signalen ermöglichen und bei Bedarf komplett ausgeschaltet werden.

Dadurch wird insbesondere eine einfach zugängliche, kontaktlose Messung des Treiber-Clocks mittels einer vergleichsweise einfachen Prüfvorrichtung 300 ermöglicht, beispielsweise mittels eines Lichtdetektors 301 und einer Analyse-Einheit 302. Da optische Strahlung als Signalträger eingesetzt wird, ist zudem insbesondere eine Ausgabe von sehr hohen Frequenzen (-GHz) auch ohne aufwendige Schnittstellen möglich.

## Patentansprüche

1. Koordinatenmessgerät (7,9,106,108,110), ausgebildet als Lasertracker zur industriellen Vermessung, zum Erfassen einer Position eines im Raum bewegbaren, einen Retroreflektor (3) aufweisenden Zielobjekts (104,104A,104B,104C), wobei das Koordinatenmessgerät mindestens aufweist
• eine Strahlungsquelle (101,101') zur Emission eines optischen Messstrahls (103), wobei der Messstrahl mittels einer Strahllenkeinheit (16,16',16",16‴) in eine definierte Raumrichtung emittiert wird und dadurch eine Zielachse (11) definiert,
• eine Entfernungsmessfunktionalität (106) zur Bestimmung einer Distanz zum Zielobjekt mittels des Messstrahls (103),
• eine Winkelmessfunktionalität zur Bestimmung einer Emissionsrichtung des Messstrahls (103),
• eine Zielverfolgungsfunktionalität zur fortlaufenden Verfolgung des Zielobjekts,
• eine Auswerte- und Steuereinheit (107) zur Datenspeicherung und Steuerung des Koordinatenmessgeräts, und
• eine Zielerfassungsfunktionalität zur Ausrichtung des Messstrahls (103) auf das Zielobjekt, mit einer Regelungseinrichtung für eine automatische Suche und Erfassung des Zielobjekts, wobei die Zielerfassungsfunktionalität mittels einer im Rahmen der Zielerfassungsfunktionalität in einem definierten Wellenlängenbereich bereitgestellten Erfassungsstrahlung erfolgt,
• eine Zielobjekt-Datenbasis, gespeichert auf der Auswerte- und Steuereinheit, welche Informationen für einen Satz von einzelnen Zielobjekten bereitstellt, mindestens umfassend
o jeweils den einzelnen Zielobjekten zugeordnete Spezifikationen, und
o jeweils den einzelnen Zielobjekten zugeordnete voneinander eindeutig unterscheidbare und zumindest einen bestimmten Wellenlängenbereich abdeckende ID-Farben, wobei jeweils genau eine ID-Farbe genau einem Zielobjekt zugeordnet ist,
• eine für das Spektrum der Wellenlängenbereiche der ID-Farben empfindliche Kamera (108), insbesondere basierend auf einem CCD- oder CMOS-Sensor, und
• Beleuchtungsmittel (109,109A,109B,109C,109D) zur Beleuchtung eines Zielobjekts mit einer das Spektrum der Wellenlängenbereiche der ID-Farben abdeckenden Identifikationsstrahlung,
wobei im Rahmen einer Identifikationsfunktionalität automatisch gesteuert durch die Auswerte- und Steuereinheit
• ein zu identifizierendes Zielobjekt mit der Identifikationsstrahlung angestrahlt wird,
• eine Bestimmung einer ID-Farbe für das Zielobjekt erfolgt, basierend auf einer mit der Kamera (108) erfassten Aufnahme des Zielobjekts,
• eine automatische Identifizierung des Zielobjekts und eines zugehörigen Reflektortyps des Retroreflektors erfolgt, basierend auf der ID-Farbe des Zielobjekts, und
• eine automatische Zuordnung der zugehörigen Spezifikationen zum Zielobjekt erfolgt, basierend auf den durch die Zielobjekt-Datenbasis bereitgestellten Informationen,
wobei die Zielerfassungsfunktionalität mittels einer zweckbestimmten Zielerfassungskamera erfolgt und die Erfassungsstrahlung in einem definierten Wellenlängenbereich ausserhalb des Spektrums der Wellenlängenbereiche der ID-Farben bereitgestellt wird, wobei die Zielerfassungskamera unempfindlich ist für Strahlung des Spektrums der Wellenlängenbereiche der ID-Farben.

2. Koordinatenmessgerät (100,100',100",100‴) nach Anspruch 1,
**dadurch gekennzeichnet, dass**
die ID-Kamera (108) unempfindlich ist für den Wellenlängenbereich der Erfassungsstrahlung.

3. Koordinatenmessgerät (100,100',100",100‴) nach einem der vorhergehenden Ansprüche,
**dadurch gekennzeichnet, dass**
die Identifikationsstrahlung nur für die Identifizierung des Zielobjekts eingeschaltet wird.

## Claims

1. Coordinate measuring device (7, 9, 106, 108, 110), embodied as a laser tracker for industrial metrology, for detecting a position of a target object (104, 104A, 104B, 104C) which can move in space and which comprises a retroreflector (3), wherein the coordinate measuring device at least comprises
• a radiation source (101, 101') for emitting an optical measurement beam (103), wherein the measurement beam is emitted in a defined spatial direction by means of a beam directing unit (16, 16', 16", 16‴) and thus defines a target axis (11),
• a distance measuring functionality (106) for determining a distance to the target object by means of the measurement beam (103),
• an angle measuring functionality for determining a direction of emission of the measurement beam (103),
• a target tracking functionality for the continuous tracking of the target object, and
• an evaluation and control unit (107) for data storage and for the control of the coordinate measuring device, and
• a target recognition functionality for orienting the measurement beam (103) toward the target object, including a regulating unit for an automatic search and recognition of the target object, wherein the target recognition functionality is implemented by means of a recognition radiation provided in a defined wavelength range within the scope of the target recognition functionality
• a target object database which is stored in the evaluation and control unit and provides information for a set of individual target objects, at least including
o specifications assigned to each of the individual target objects, and
o ID colors, each of which is assigned to an individual target object and covers at least one certain wavelength range, wherein precisely one ID color is assigned to precisely one target object,
• a camera (108) which is sensitive to the spectrum of the wavelength ranges of the ID colors and is based, in particular, on a CCD- or CMOS-sensor, and
• illumination means (109, 109A, 109B, 109C, 109D) for illuminating a target object with an identification radiation covering the spectrum of the wavelength ranges of the ID colors,
wherein, within the scope of an identification functionality automatically controlled by the evaluation and control unit
• a target object to be identified is irradiated with the identification radiation,
• a determination of an ID color for the target object takes place based on an image of the target object captured with the aid of the camera (108),
• an automatic identification of the target object and an assigned reflector type of the retroreflector takes place based on the ID color of the target object, and
• an automatic allocation of the specifications to the target object takes place based on the information provided by the target object database,
wherein
• the target recognition functionality is implemented with the aid of a dedicated target recognition camera and the recognition radiation is provided in a defined wavelength range outside of the spectrum of the wavelength ranges of the ID colors, wherein the target recognition camera is insensitive to radiation from the spectrum of the wavelength ranges of the ID colors.

2. Coordinate measuring device (100, 100', 100", 100‴) according to Claim 1,
**characterized in that**
the ID-camera (108) is insensitive to the wavelength range of the recognition radiation.

3. Coordinate measuring device (100, 100', 100", 100‴) according to any one of the previous claims **characterized in that**
the identification radiation is switched on only for the identification of the target object.

## Revendications

1. Appareil de mesure de coordonnées (7, 9, 106, 108, 110) réalisé comme poursuite laser destinée à l'arpentage industriel, pour saisir une position d'un objet cible (104, 104A, 104B, 104C) mobile dans l'espace et comportant un rétroréflecteur (3), dans lequel l'appareil de mesure de coordonnées comporte au moins
• une source de rayonnement (101, 101') pour émettre un faisceau de mesure optique (103), dans lequel le faisceau de mesure est émis dans une direction spatiale définie au moyen d'une unité de déviation de faisceau (16, 16', 16", 16'") et définit ainsi un axe cible (11),
• une fonctionnalité de télémétrie (106) pour déterminer une distance jusqu'à l'objet cible au moyen du faisceau de mesure (103),
• une fonctionnalité de mesure d'angle pour déterminer une direction d'émission du faisceau de mesure (103),
• une fonctionnalité de suivi de cible pour le suivi en continu de l'objet cible,
• une unité de contrôle et de commande (107) pour la mémorisation des données et la commande de l'appareil de mesure de coordonnées, et
• une fonctionnalité de saisie de cible pour l'orientation du faisceau de mesure (103) sur l'objet cible, dotée d'un dispositif de régulation pour une recherche et une saisie automatique de l'objet cible, dans lequel la fonctionnalité de saisie de cible s'effectue au moyen d'un rayonnement de saisie fourni dans un intervalle défini de longueurs d'onde dans le cadre de la fonctionnalité de saisie de cible,
• d'une base de données d'objet cible, mémorisée sur l'unité de contrôle et de commande (107), laquelle fournit des informations pour une série d'objets cibles individuels, comprenant au moins
o des spécifications respectivement affectées aux objets cibles individuels, et
o des couleurs d'identification respectivement affectées aux objets cibles individuels, différenciables l'une de l'autre de façon univoque et couvrant au moins un intervalle défini de longueurs d'onde, dans lequel exactement une couleur d'identification est respectivement affectée à exactement un objet cible,
• une caméra (108) sensible pour le spectre des longueurs d'onde des couleurs d'identification, en particulier basée sur un capteur CCD ou CMOS, et
• des moyens d'éclairage (109, 109A, 109B, 109C, 109D) pour l'éclairage d'un objet cible avec un rayonnement d'identification couvrant le spectre des longueurs d'onde des couleurs d'identification,
dans lequel dans le cadre d'une fonctionnalité d'identification commandée automatiquement par l'unité de contrôle et de commande,
• un objet cible à identifier est illuminé avec le rayonnement d'identification,
• une détermination d'une couleur d'identification pour l'objet cible s'effectue sur la base d'une capture de l'objet cible saisie avec la caméra (108),
• une identification automatique de l'objet cible et d'un type de réflecteur associé du rétroréflecteur s'effectue, sur la base de la couleur d'identification de l'objet cible, et
• une affectation automatique à l'objet cible des spécifications associées s'effectue sur la base des informations fournies par la base de données d'objets cibles,
dans lequel
la fonctionnalité de saisie de cible s'effectue au moyen d'une caméra de saisie de cible dédiée et le rayonnement de saisie est fourni dans un intervalle de longueur d'onde à l'extérieur du spectre des longueurs d'onde des couleurs d'identification, dans lequel la caméra de saisie de cible n'est pas sensible au rayonnement du spectre des longueurs d'onde des couleurs d'identification.

2. Appareil de mesure de coordonnées (100, 100', 100", 100‴) selon la revendication 1,
**caractérisé en ce que**
la caméra d'identification (108) n'est pas sensible dans l'intervalle de longueurs d'onde du rayonnement de saisie.

3. Appareil de mesure de coordonnées (100, 100', 100", 100‴) selon l'une des revendications précédentes, **caractérisé en ce que**
le rayonnement d'identification est allumé uniquement pour l'identification de l'objet cible.
